# EUROPEAN PATENT SPECIFICATION

(11) **EP 3 094 220 B1**
(45) Date of publication and mention of the grant of the patent: **10.10.2018**
(21) Application number: 14799406.5
(22) Date of filing: 14.11.2014
(51) Int. Cl.: A47J 31/36

(54) **BREWING UNIT**
BRÜHEINHEIT
UNITÉ D'INFUSION

(30) Priority: 14.11.2013 IT MI20131891
(43) Date of publication of application: 23.11.2016
(73) Proprietor: CBT Italia S.r.l., 27058 Voghera (Pavia) (IT)
(72) Inventor: TONELLI, Alessandro, I-40041 Gaggio Montano (Bologna) (IT); DE CONTI, Fabio, I-27050 Retorbido (Pavia) (IT); TABORELLI, Massimo, I-21049 Tradate (Varese) (IT)
(74) Representative: Schmalz, Günther
(86) International application number: PCT/EP2014/074572
(87) International publication number: WO 2015/071399

(56) References cited:
- WO-A1-2011/138723
- US-A1- 2005 129 809
- US-A1- 2009 308 258
- US-A1- 2012 000 371

## Description

The present invention relates to a brewing unit for automatic machines for producing a food infusion, in particular, but not necessarily, for espresso coffee machines.

As is well known, espresso coffee machines have a brewing unit composed of a container defining a brewing chamber and a closing piston which are reciprocally movable so as to bring the brewing unit from an open configuration of the brewing chamber, in which a load of coffee is introduced, into a closed configuration of the brewing chamber, in which brewing takes place.

Traditional brewing units can be actuated manually or by means of an electric motor and in general have a kinematic movement for opening and closing the brewing chamber made up of a control lever and a drive transmission comprising multiple oscillating levers variably interconnected with one another.

The kinematic movement is generally highly complex and subject to broad linear and/or angular movements of the container and/or closing piston, with a consequent increase in the overall dimensions of the brewing unit.

This can complicate the positioning of the brewing unit in the coffee machine, especially when, because of constructive requirements, there is limited available space.

US2005/129809 describes a brewing unit according to the preamble of claim 1.

The technical task that the present invention addresses, therefore, is to produce a brewing unit that enables the aforesaid technical drawbacks of the prior art to be eliminated.

Within the scope of this technical task, one object of the invention is to provide a brewing unit that is constructively simple and extremely compact.

Another object of the invention is to produce an extremely safe, precise brewing unit that is reliable in its operation.

The technical task, as well as these and other objects are achieved, according to the present invention, by providing a brewing unit for a machine for producing a food infusion, comprising a container defining a brewing chamber, a piston for closing the brewing chamber, a control lever that can be actuated to switch the brewing unit reversibly from an open configuration to a closed configuration of the brewing chamber, and a fixed supporting frame for the container, the closing piston and the control lever, said container having an axis disposed coaxially with the axis of the closing piston in the closed configuration of the brewing chamber, said control lever having an axis of hinging to said frame, which at least in the closed configuration of the brewing chamber substantially intersects the extension of the axes of the container and of the closing piston, characterized in that said container bears integral therewith one or more guide elements sliding along corresponding guides provided on said frame, said corresponding guides are disposed and configured so as to subject said container to a rotation and translation movement, and in that one guide comprises a first guide part along which the corresponding guide element can slide so as to subject the container to a first rotation and translation movement from the open configuration to the closed configuration, and a second guide part distinct from the first guide part along which said corresponding guide element can slide so as to subject the container to a second rotation and translation movement, different from the first rotation and translation movement, from the closed configuration to the open configuration.

The term "substantially" means that the axis of hinging of the control lever to the frame must be located on the extension of the axes of the container and of the closing piston or must be offset therefrom, due to possible constructive tolerances, by no more than 5 millimetres.

Thanks to the special positioning of the axis of hinging of the control lever, it is possible to obtain not only an enormously simplified construction for the kinematic movement of the brewing unit, thus limiting the number of components to a minimum, but also an extremely compact construction by virtue of the limited angular and linear movements necessary for the moving parts in order to reach their operating positions.

Other features of the present invention are defined, moreover, in the claims below.

Additional features and advantages of the invention will be more apparent from the description of a preferred but not exclusive embodiment of the brewing unit according to the invention, illustrated by way of non-limiting example in the appended drawings, in which:

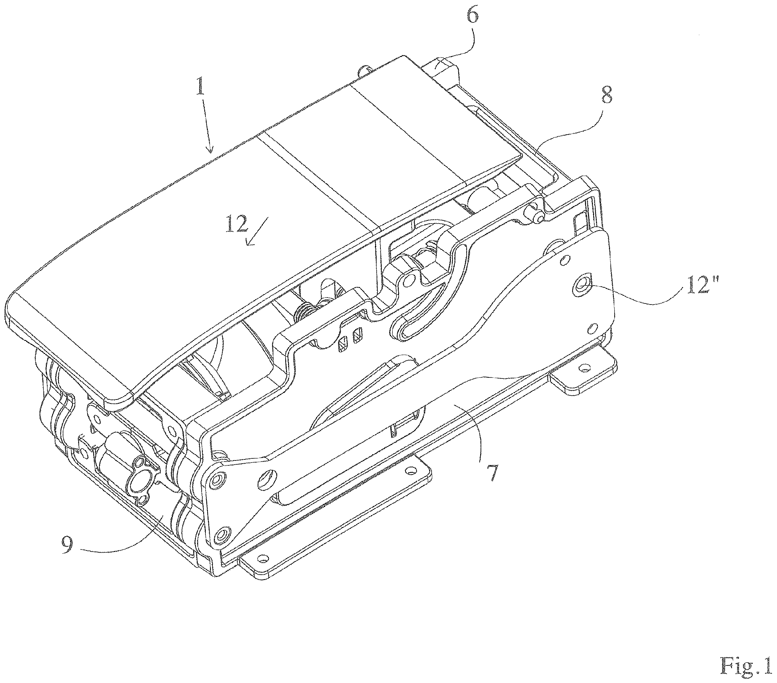

figure 1 shows a perspective view from above of the brewing unit in the closed configuration;

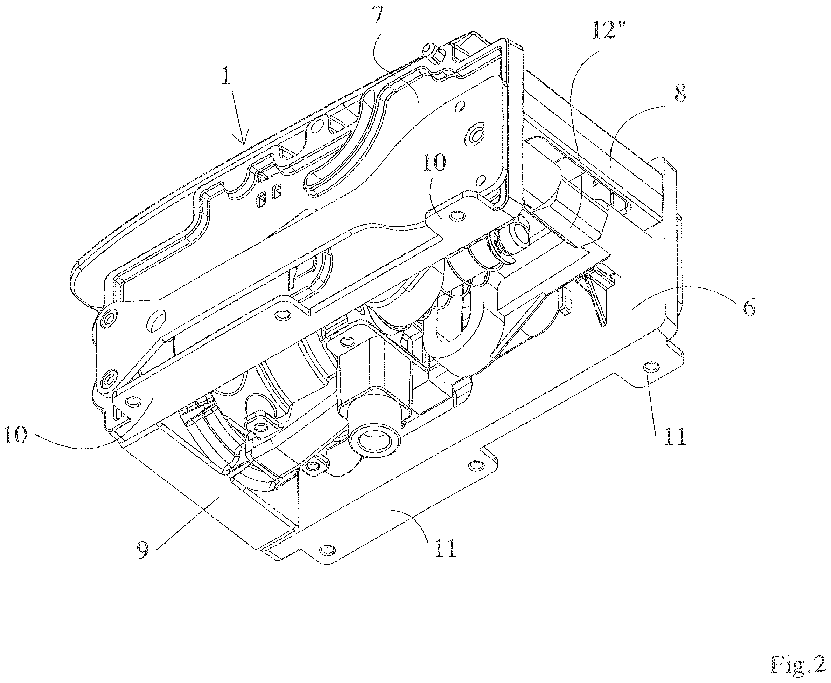

figure 2 shows a perspective view from below of the brewing unit of figure 1 in the closed configuration;

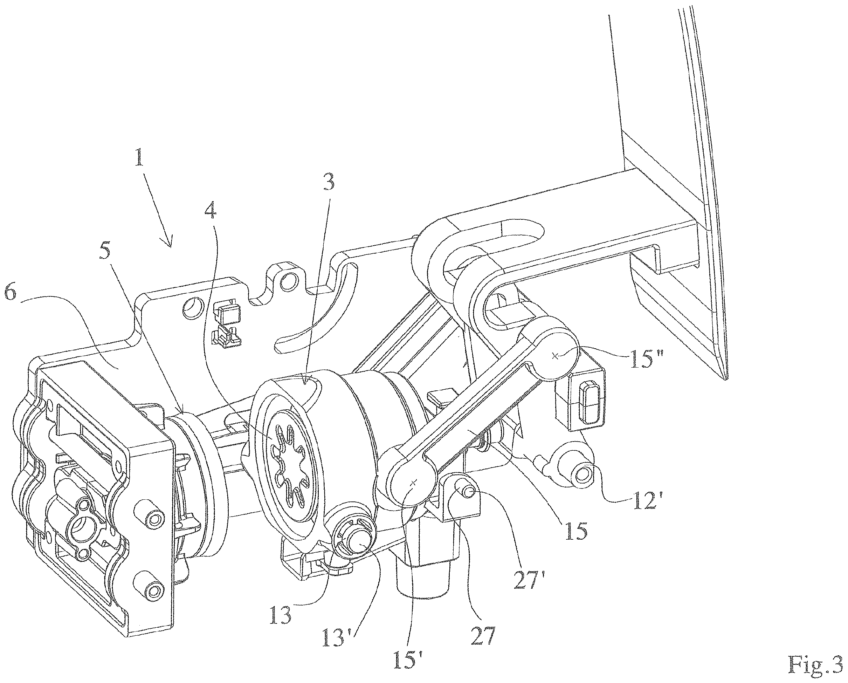

figure 3 shows a perspective view of the brewing unit of figure 1 in an intermediate opening configuration, in which the supporting frame has been partially removed for convenience;
figure 4 shows a side elevation view of one side of the supporting frame of the brewing unit of figure 1, in which a line in boldface indicates the trajectory followed by the guide pin when switching the brewing unit from the open configuration to the closed configuration of the brewing chamber;
figure 5 shows a side elevation view of one side of the supporting frame of the brewing unit of figure 1, in which a line in boldface indicates the trajectory followed by the guide element when switching the brewing unit from the closed configuration to the open configuration of the brewing chamber;

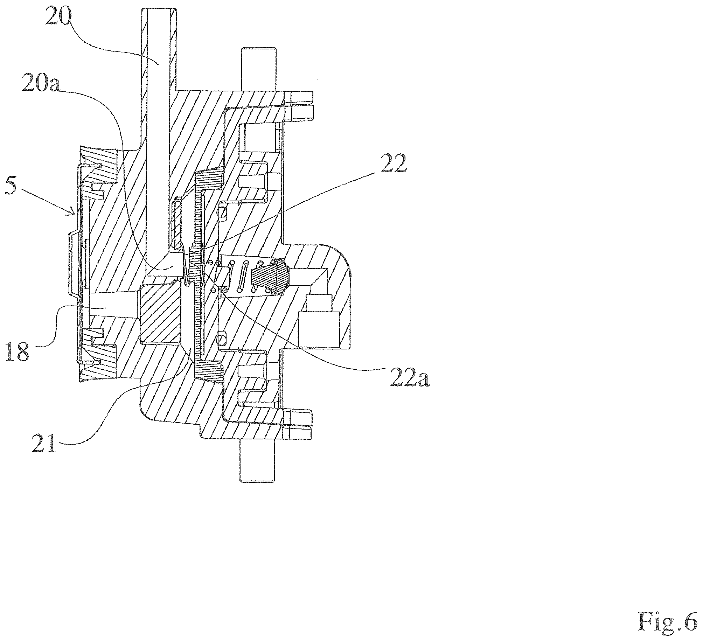

figure 6 shows a sectional view of the closing piston of the brewing unit of figure 1;
figure 7 shows a sectional view of the brewing unit of figure 1 in the initial open configuration of the brewing chamber, prior to the introduction of a load of coffee into the container;
figures 8 to 12 show a sectional view of the brewing unit of figure 1 after the introduction of a new load of coffee into the container, in the sequence of configurations completed in order to pass from the initial open configuration of the brewing chamber to the final closed configuration of the brewing chamber;
figures 13 and 14 show a sectional view of the brewing unit of figure 1, after brewing, in the sequence of configurations completed in order to pass from the final closed configuration of the brewing chamber to the initial open configuration of the brewing chamber, during which the used capsule of coffee is expelled from the container.

With reference to the aforementioned figures, they show a brewing unit for an espresso coffee machine, indicated overall with the reference number 1.

Naturally, the brewing unit can also be applied to automatic machines for producing food infusions of another type.

In the specific case considered, the brewing unit 1 is of the type that can be loaded with a pre-packaged load of coffee 2, but it is obviously foreseeable that the load of coffee may be in loose powder form.

The brewing unit 1 comprises a supporting frame 6, 7, 8, 9 for a container 3 defining a brewing chamber 4, a piston 5 for closing the brewing chamber 4, and a control lever 12 that can be actuated to switch the brewing unit 1 reversibly from an open configuration to a closed configuration of the brewing chamber 4, in which the container 3 has its axis 3' disposed coaxially with the axis 5' of the closing piston 5.

The supporting frame 6, 7, 8, 9 has a quadrangular box-like configuration and is provided with two opposing longitudinal sides 6, 7, which are spaced apart and defined by parallel flat plates, a base 9, which transversely connects the sides 6, 7 at a first longitudinal end thereof, and a bridge 8 connecting the second longitudinal end of the sides 6, 7, which serves to reinforce the construction of the supporting frame 6, 7, 8, 9.

The sides 6, 7 are also endowed with external perimeter tabs 10, 11 for fastening to the frame of the coffee machine.

According to a salient aspect of the invention, the control lever 12 has a geometric axis 12' of hinging to the frame 6, 7, 8, 9, which at least in the closed configuration of the brewing chamber 4 intersects the extension of the axes 3', 5' of the container 3 and of the closing piston 5.

The axis of oscillation 12' of the control lever 12 in particular is physically defined by a rotation pin 12" supported by the sides 6, 7 of the supporting frame 6, 7, 8, 9 and oriented perpendicularly to the plane in which the sides 6, 7 of the supporting frame 6, 7, 8, 9 mainly lie.

The closing piston 5 is fixed to the base 9, and extends into the compartment delimited by the supporting frame 6, 7, 8, 9, with the axis 5' disposed parallel to the longitudinal direction of extension of the sides 6, 7 and thus perpendicular to the hinge axis 12' of the control lever 12.

The container 3, likewise positioned in the compartment delimited by the supporting frame 6, 7, 8, 9, has a lateral wall 3a, a base 3b and an open mouth 3c for introducing and expelling the load of coffee 2, and bears integral therewith one or more guide elements 13, 27 sliding along corresponding guides 14, 28 provided on the supporting frame 6, 7, 8, 9.

In particular, the guide elements 13, 27 comprise a first guide pin 13 and a second guide pin 27 obtained from external protrusions of the lateral wall 3a of the container 3, whilst the corresponding guides 14, 28 are formed by grooves fashioned on the inside of the sides 6, 7.

The geometric axes 13', 27' of the guide pins 13, 27 extend in a position that is eccentric relative to the axis 3' of the container 3 and parallel to the oscillation axis 12' of the lever 12.

The container 3 is connected to the control lever 12 by means of a transmission rod 15.

The axis 15' of hinging of the transmission rod 15 to the container 3 and the axis 15" of hinging of the transmission rod 15 to the control lever 12 are parallel to the oscillation axis 12' of the control lever 12.

The axis 15' of hinging of the transmission rod 15 to the container 3 moreover intersects the axis 3' of the container 3.

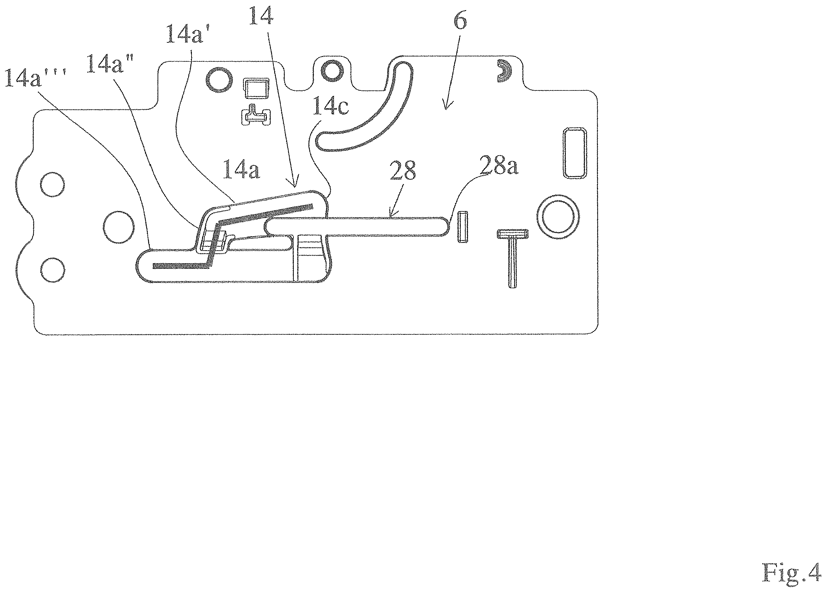

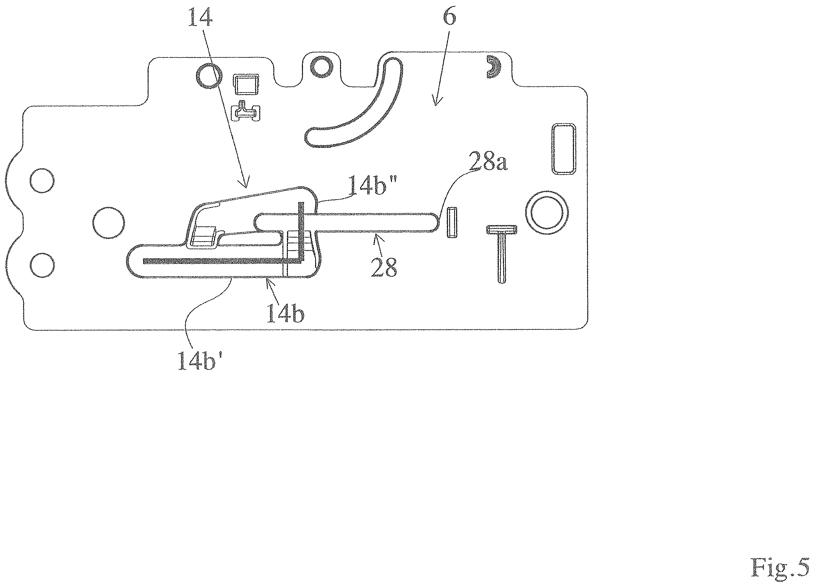

The guide 14 is disposed and configured so as to subject the container 3 to a rotation and translation movement and for this purpose it comprises a first guide part 14a along which the guide pin 13 can slide so as to complete a trajectory indicated by a line in boldface in figure 4 in order to subject the container 3 to a first rotation and translation movement from the open configuration to the closed configuration of the brewing chamber 4, and at least a second guide part 14b distinct from the first guide part 14a, along which the guide pin 13 can slide so as to complete a trajectory indicated by a line in boldface in figure 5 in order to subject the container 3 to a second rotation and translation movement, different from the first rotation and translation movement, from the closed configuration to the open configuration of the brewing chamber 4.

The first guide part 14a comprises, in succession, a first rectilinear portion 14a', slightly inclined relative to the direction of the axis 5' of the closing piston 5, for carrying out a first rotation and translation of the container 3 from the position for loading the load of coffee 2, a second rectilinear portion 14a", more greatly inclined, for carrying out a second rotation and translation of the container 3 in order to align its axis 3' with the axis 5' of the closing piston 5, and a third rectilinear portion 14a"', parallel to the direction of the axis 5' of the closing piston 5, for carrying out a translation by virtue of which the container 3 will engage the closing piston 5 so as to close the brewing chamber 4.

The second guide part 14b comprises, in succession, a first rectilinear portion 14b', which is parallel to the direction of the axis 5' of the closing piston 5 and partly coincides with but extends further than the rectilinear portion 14a"' in order to guarantee a backward movement of the container 3 from the closing piston 5 such as to create the necessary space for the expulsion and fall of the used load of coffee 2, and a second rectilinear portion 14b", perpendicular to the first portion 14b', for bringing the container 3 from the position of alignment of its axis 3' with the axis 5' of the closing piston 5 to the position for loading a new load of coffee 2.

The guide 28 has an entirely rectilinear extension and is disposed parallel to the axis of the closing piston 5.

The container 3 has an expulsion piston 16 inside it, positioned coaxially with the container 3 itself and provided with a rod 16a that extends outside the container 3 through a base 3b of the latter.

The expulsion piston 16 slides axially between a position adjacent to the base 3b of the container 3, in which it does not interfere with the positioning of the load of coffee 2 in the brewing chamber 4, and a position adjacent to the mouth 3c of the container 3 so as to discharge the used load of coffee 2 from the brewing chamber 4.

At the location of the pin 12" defining its hinge axis 12', the control lever 12 has a driving cam 17 engageable with the end 16a' of the rod 16a of the expulsion piston 16 so as to move the latter from a position adjacent to the base 3b of the container 3 to the position adjacent to the mouth 3c of the container 3.

The brewing unit 1 has a supply route 18 for drawing water to the brewing chamber 4, provided in the body of the closing piston 5, and an outflow route 19 for the food infusion produced by the brewing chamber 4, provided in the body of the container 3.

In the body of the closing piston 5, there is also provided a drainage route 20 in fluid communication with the supply route 18 via a manifold 21, and a valve device drivable by the pressure of the water entering the closing piston 5 so as to selectively close the drainage route 20.

The valve device drivable by the water pressure preferably comprises an elastically deformable membrane 22 which delimits the manifold 21 and has a protrusion 22a facing the end 20a of the drainage route 20 leading into the manifold 21.

The brewing unit 1 is further provided with a mechanical valve device for emulsifying the infusion, comprising a shut-off element 23 translatable in a valve body 24 so as to close an outflow route 19 for the infusion present in the container 3, and an elastic element 25 configured and disposed so as to exert on the shut-off element 23 a calibrated elastic pushing force in closing the outflow route 19.

A chute 26 for conveying the infusion toward the outside extends externally to the valve body 24 and on the side of the lateral wall 3a of the container 3.

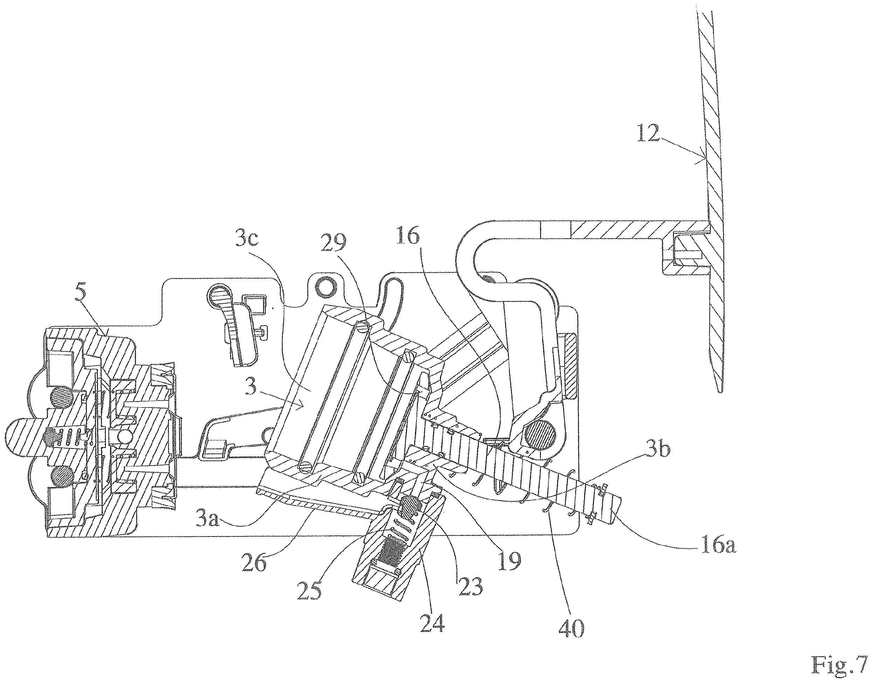

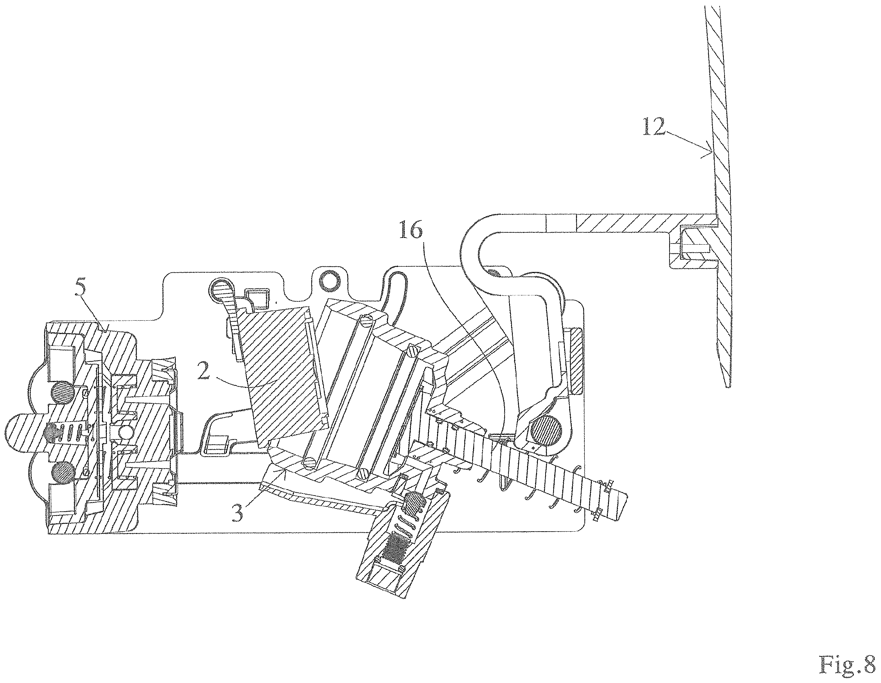

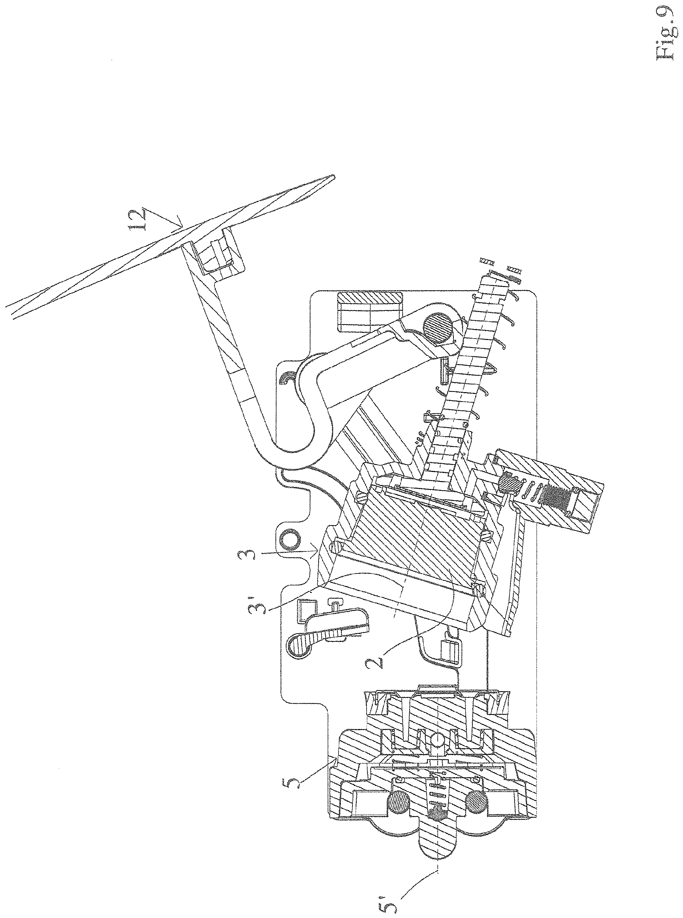

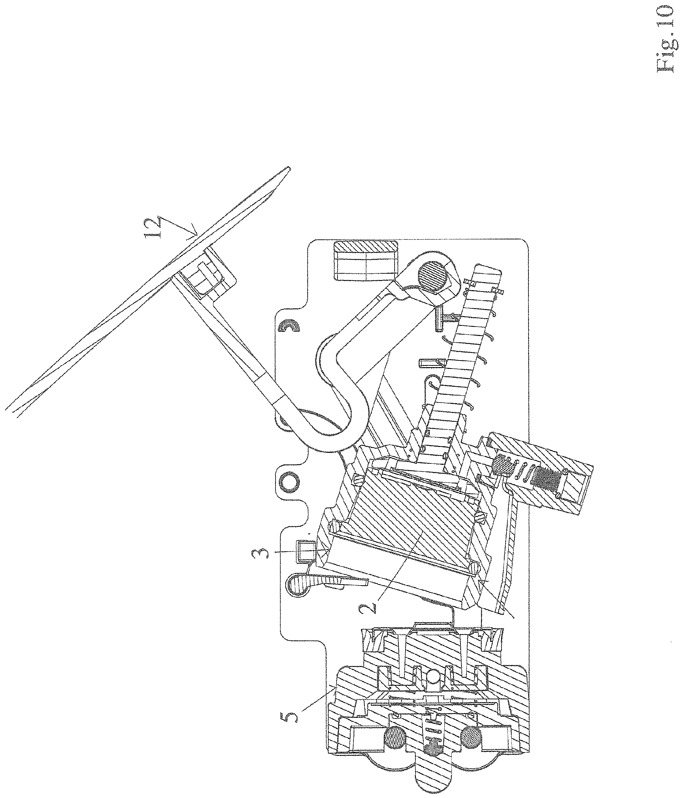

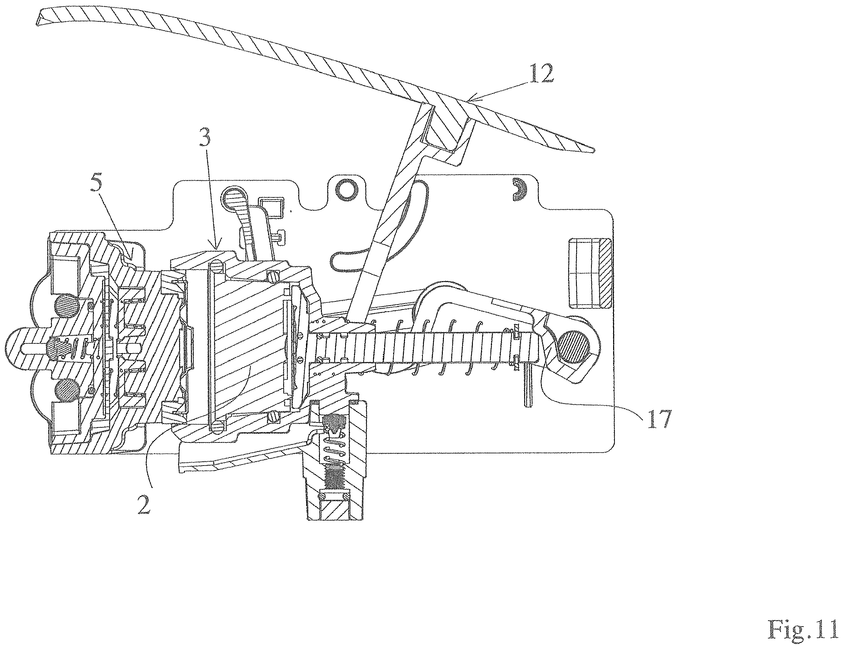

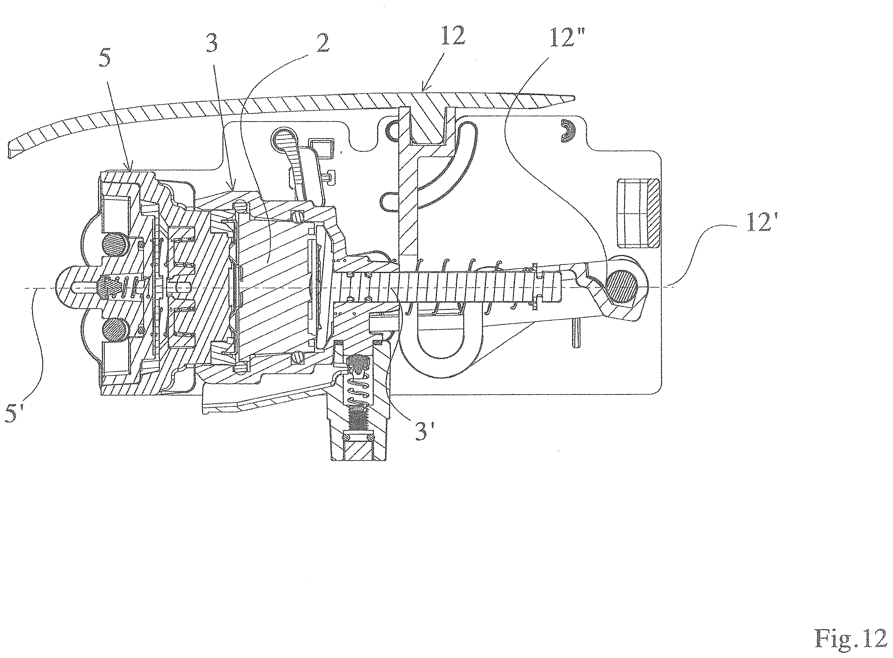

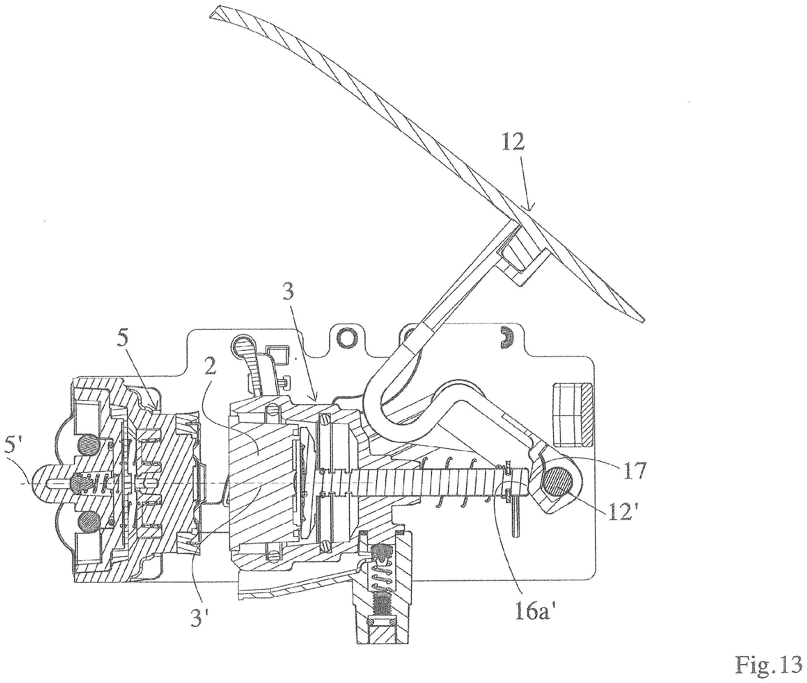

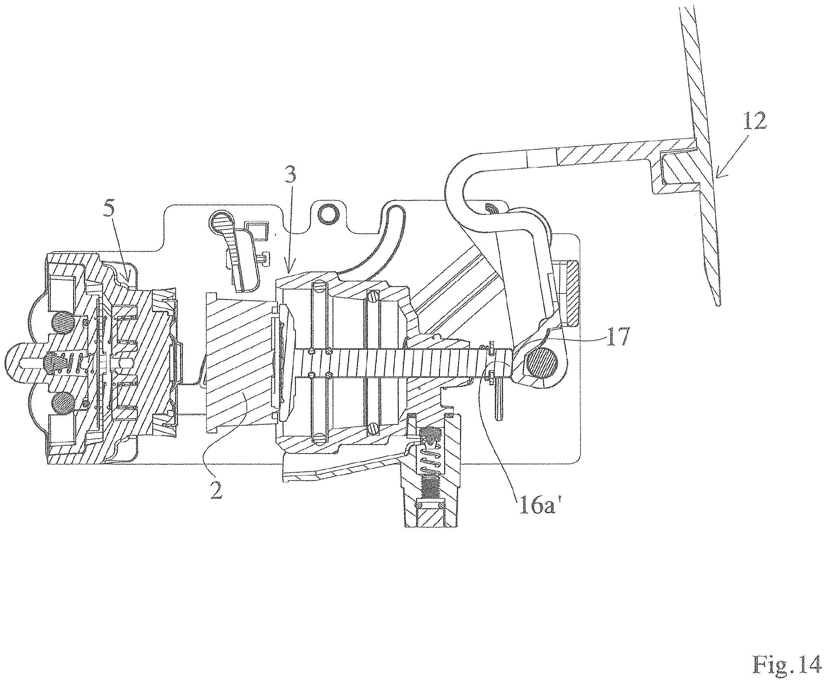

The operation of the brewing unit 1, illustrated in sequence from figure 7 to figure 14, is briefly as follows.

When the manual control lever 12 is in the upright position, the axis 3'of the container 3 will be inclined upwards by about 45° relative to the axis 5' of the closing piston 5, oriented horizontally. The guide pin 13 is positioned at the end 14c of the guide portion 14a' and the pin 27 is positioned at the end 28a of the guide 28.

The user first introduces a load of coffee 2 into the brewing chamber 4 and then actuates the control lever 12 to close it, making it complete an angular stroke of about 45°.

The rotation of the control lever 12 is transmitted by the rod 15 to the container 3, which is in turn guided by the pins 13, 27 so as to carry out a rotation and translation as a result of the pin 13 sliding along the guide portions 14a' and 14a", and, finally, a translation purely of engagement with the closing piston 5 in order to close the brewing chamber 4 as a result of the pin 13 sliding along the guide portion 14a"'.

At this point the brewing process takes place; a supply pump (not shown) delivers water under pressure, for example at 8 atmospheres, to the boiler (not shown) of the coffee machine and from the boiler to the closing piston 5. The pressure of the hot water entering the closing piston 5 deforms the membrane 22, which closes off the drainage route 20 whilst leaving open the supply route 18, from which the hot water thus enters the brewing chamber 4.

The infusion obtained in the brewing chamber 4 is discharged through the outflow route 19, after having passed through special passage openings 29 provided in the expulsion piston 16, only when the pressure of the infusion generates a pushing force on the shut-off element that is greater than the predetermined one exerted on the shut-off element 23 in the opposite direction by the elastic element 25.

Dispensing the infusion under pressure assures the incorporation therein of the amount of air necessary to emulsify it.

At the end of the brewing process, when the supply pump is deactivated and the pressure in the closing piston 5 is released accordingly, the membrane 22 again takes its initial form, reopening the drainage route 20, from which any residual hot water present in the closing piston 5 can flow out.

In order to carry out a new brewing process, the user must first bring the control lever 12 back into the opening position by making it complete a rotation of around 90° in the direction opposite that of the previous rotation.

The rotation of the control lever 12 is transmitted by the rod 15 to the container 3, which is in turn guided by the pins 13, 27 so as to initially complete purely a translation as a result of the pin 13 sliding along the rectilinear guide portion 14b'.

During this movement, the container 3 disengages from the closing piston 5, thus reopening the brewing chamber 4 until the end 16a' of the expulsion piston 16 is intercepted at a certain point by the driving cam 17, which blocks further axial sliding whilst permitting the container 3 to continue its travel: the consequent movement of the container 3 relative to the expulsion piston 16 causes a movement of the expulsion piston 16 toward the mouth 3c of the container 3, whereby the expulsion piston 16 pushes the used load of coffee 2 outside the open brewing chamber 4. In the final part of the rotation of the control lever 12, the container 3, as a result of the pin 13 sliding along the curved guide portion 14b", carries out a rotation and translation that brings it back into the initial position for loading a new load of coffee 2. A special reset spring 40, fitted over the rod 16a of the expulsion piston 16 and interposed between the latter and the base 3b of the container 3, is loaded, becoming compressed during the upward movement of the expulsion piston 16 from the base 3b so as to bring the expulsion piston 16 back against the base 3b when the rod 16a disengages from the cam 17.

It should be noted that the special location of the hinge axis of the control lever 12 which intersects the extension of the axes 3', 5' of the container 3 and of the closing piston 5 at least in the closed configuration of the brewing unit 1 is also adaptable to brewing units subjected to a movement that is different from the one described, for example a movement that envisages coaxiality between the axes 3' and 5' of the container 3 and of the closing piston 5 also in the open configuration of the brewing unit 1.

The brewing unit for a machine for producing a food infusion thus conceived is susceptible of numerous modifications and variants, all falling within the scope of the inventive concept; moreover, all the details may be replaced with technically equivalent elements.

In practice, all of the materials used, as well as the dimensions, can be any whatsoever according to need and the state of the art.

## Claims

1. A brewing unit (1) for a machine for producing a food infusion, comprising a container (3) defining a brewing chamber (4), a piston for closing (5) the brewing chamber (4), a control lever (12) that can be actuated to switch the brewing unit (1) reversibly from an open configuration to a closed configuration of the brewing chamber (4), and a fixed supporting frame (6, 7, 8, 9) for the container (3), the closing piston (5) and the control lever (12), said container (3) having an axis (3') disposed coaxially with the axis (5') of the closing piston (5) in the closed configuration of the brewing chamber (4), said control lever (12) having an axis (12') of hinging to said frame (6, 7, 8, 9), which at least in the closed configuration of the brewing chamber (4) substantially intersects the extension of the axes (3', 5') of the container (3) and of the closing piston (5), **characterized in that** said container (3) bears integral therewith one or more guide elements (13, 27) sliding along corresponding guides (14, 28) provided on said frame (6, 7, 8, 9), said corresponding guides (14, 28) are disposed and configured so as to subject said container (3) to a rotation and translation movement, and **in that** one guide (14) comprises a first guide part (14a) along which the corresponding guide element (13) can slide so as to subject the container (3) to a first rotation and translation movement from the open configuration to the closed configuration, and a second guide part (14b) distinct from the first guide part (14a) along which said corresponding guide element (13) can slide so as to subject the container (3) to a second rotation and translation movement, different from the first rotation and translation movement, from the closed configuration to the open configuration.

2. The brewing unit (1) according to the preceding claim, **characterized in that** there is provided a transmission rod (15) connecting said control lever (12) to said container (3).

3. The brewing unit (1) according to any preceding claim, **characterized in that** said closing piston (5) is fixed.

4. The brewing unit (1) according to any preceding claim, **characterized in that** said container (3) has associated with it an expulsion piston (16) sliding coaxially inside it and provided with a rod (16a) that extends outside the container (3) through a base (3b) of the latter.

5. The brewing unit (1) according to the preceding claim, **characterized in that** said control lever (12) has, along its hinge axis (12'), a driving cam (17) engageable with the end (16a') of the rod (16a) of the expulsion piston (16) so as to move the latter from a position adjacent to the base (3b) of the container (3) to an expulsion position adjacent to a mouth (3a) of the container.

6. The brewing unit (1) according to any preceding claim, **characterized in that** it comprises a mechanical valve device for emulsifying the infusion, comprising a shut-off element (23) translatable in a valve body (24) so as to close an outflow route (19) for the infusion present in the container (3), and an elastic element (25) configured and disposed so as to exert on the shut-off element (23) a calibrated elastic pushing force in closing said outflow route (19).

7. The brewing unit (1) according to any preceding claim, **characterized in that** said closing piston (5) has a supply route (18) for drawing water to the brewing chamber (4), a drainage route (20) in fluid communication with the supply route (18), and a valve device drivable by the pressure of the water to selectively close said drainage route (20).

8. The brewing unit (1) according to the preceding claim, **characterized in that** said valve device drivable by the pressure of the water comprises an elastically deformable membrane (22).

9. An automatic coffee machine comprising a brewing unit (1) according to any preceding claim.

## Patentansprüche

1. Brühgruppe (1) für eine Maschine zum Zubereiten eines flüssigen Nahrungsmittelprodukts, beinhaltend einen Behälter (3) welcher eine Brühkammer (4) definiert, einen Kolben zum Verschließen (5) der Brühkammer (4), einen Bedienhebel (12) welcher betätigt werden kann um die Brühkammer (1) umkehrbar von einem offenen Zustand der Brühkammer (4) in einen geschlossenen Zustand der Brühkammer (4) zu überführen, und einen feststehenden Tragrahmen (6, 7, 8, 9) für den Behälter (3), den Verschlusskolben (3) und den Bedienhebel (12), wobei der Behälter (3) eine Achse (3') aufweist, die im geschlossenen Zustand der Brühkammer (4) koaxial zur Achse (5') des Verschlusskolben (5) angeordnet ist, der Bedienhebel (12) eine Achse (12') aufweist welche schwenkbar mit dem Tragrahmen (6, 7, 8, 9) verbunden ist und zumindest im geschlossenen Zustand der Brühkammer (4) im Wesentlichen sich mit der Verlängerung der Achsen (3', 5') des Behälters (3) und des Verschlusskolbens (3) überschneidet,
**dadurch gekennzeichnet: dass**
der Behälter (3) ein oder mehrere integrierte Führungselemente (13, 27) aufweist welche entlang korrespondierender Führungen (14, 28) die am Rahmen (6, 7, 8, 9) vorgesehen sind, gleiten, wobei die korrespondierenden Führungen (14, 28) derart ausgestaltet sind, dass sie den Behälter (3) in eine rotierende und translatorische Bewegung versetzen, und dass eine der Führungen (14) ein erstes Führungsteil (14a) aufweist entlang dessen das korrespondierende Führungselement (13) gleiten kann um den Behälter (3) in einer ersten rotierenden und translatorischen Bewegung von dem offenen in den geschlossenen Zustand zu überführen und dass die eine der Führungen (14) ein zweites Führungsteil (14b) aufweist, welches sich vom ersten Führungsteil (14a) unterscheidet, entlang dessen das Führungselement (13) gleiten kann um den Behälter (3) in einer zweiten rotierenden und translatorischen Bewegung, die unterschiedlich zur ersten rotierenden und translatorischen Bewegung ist, vom geschlossenen in den offenen Zustand zu überführen.

2. Brühgruppe (1) nach dem vorangehenden Anspruch, **dadurch gekennzeichnet, dass** eine Übertragungsstange (15) vorgesehen ist die den Bedienhebel (12) mit dem Behälter (3) verbindet.

3. Brühgruppe (1) nach einem der vorangehenden Ansprüche, **dadurch gekennzeichnet, dass** der Verschlusskolben (5) feststehend ist.

4. Brühgruppe (1) nach einem der vorangehenden Ansprüche, **dadurch gekennzeichnet, dass** der Behälter (3) mit einen innerhalb des Behälters (3) gleitenden koaxialen Auswurfkolben (16) verbunden ist, welcher eine Stange (16a) aufweist die sich durch eine Basis (3a) des Behälters (3) außenseitig des Behälters (3) erstreckt.

5. Brühgruppe (1) nach einem der vorangehenden Ansprüche, **dadurch gekennzeichnet, dass** der Bedienhebel (12) entlang der Schwenkachse (12') einen Mitnehmernocken aufweist, welcher mit dem Ende (16a') der Stange (16a) des Auswurfkolbens (16) im Eingriff ist so dass der Auswurfkolben (16) von einer Position nahe der Basis (3b) des Behälters (3) zu einer Auswurfposition, die an den Mund des Behälters angrenzt, versetzt wird.

6. Brühgruppe (1) nach einem der vorangehenden Ansprüche, **dadurch gekennzeichnet, dass** die Brühgruppe (1) eine mechanische Ventileinrichtung für die Emulgierung des Aufgusses mit einem im dem Gehäuse der Ventileinrichtung verschiebbaren Verschlusselement (23) zum Verschließen eines Abflussweges aufweist, welches derart ausgestaltet ist, dass es auf das Verschlusselement (23) eine vordefinierte elastische Druckkraft ausübt um den Abflussweg (19) zu verschließen.

7. Brühgruppe (1) nach einem der vorangehenden Ansprüche, **dadurch gekennzeichnet, dass** der Verschlusskolben (5) einen Versorgungskanal (18) zum Ansaugen von Wasser in die Brühkammer (4) und einen Entwässerungskanal (20) in Fluidverbindung mit dem Versorgungskanal (18) aufweist und eine Ventileinrichtung, die angetrieben vom Wasserdruck wahlweise den Entwässerungskanal (20) verschließt.

8. Brühgruppe (1) nach dem vorangehenden Anspruch, **dadurch gekennzeichnet, dass** die vom Wasserdruck angetriebene Ventileinrichtung eine elastisch verformbare Membrane (22) aufweist.

9. Eine automatische Kaffeemaschine die eine Brühgruppe (1) nach einem der vorangehenden Ansprüche aufweist.

## Revendications

1. Unité d'infusion (1) pour une machine servant à produire une infusion alimentaire, comprenant un réceptacle (3) définissant une chambre d'infusion (4), un piston de fermeture (5) de la chambre d'infusion (4), un levier de commande (12) qui peut être actionné pour faire passer l'unité d'infusion (1), de manière réversible, d'une configuration ouverte à une configuration fermée de la chambre d'infusion (4), et une structure de support (6, 7, 8, 9) fixe pour le réceptacle (3), le piston de fermeture (5) et le levier de commande (12), ledit réceptacle (3) présentant un axe (3') disposé de manière coaxiale vis-à-vis de l'axe (5') du piston de fermeture (5) dans la configuration fermée de la chambre d'infusion (4), ledit levier de commande (12) présentant un axe (12') d'articulation sur ladite structure (6, 7, 8, 9), qui croise essentiellement, au moins dans la configuration fermée de la chambre d'infusion (4), l'étendue des axes (3', 5') du réceptacle (3) et du piston de fermeture (5), **caractérisée en ce que** ledit réceptacle (3) comporte un ou plusieurs éléments de guidage (13, 27) formés d'un seul tenant avec lui, glissant le long de guides (14, 28) correspondants prévus sur ladite structure (6, 7, 8, 9), lesdits guides (14, 28) correspondants étant disposés et configurés de façon à soumettre ledit réceptacle (3) à un mouvement de rotation et de translation, et **en ce qu'**un guide (14) comprend une première partie de guidage (14a) le long de laquelle l'élément de guidage (13) correspondant peut glisser de façon à soumettre le réceptacle (3) à un premier mouvement de rotation et de translation de la configuration ouverte à la configuration fermée, et une seconde partie de guidage (14b), distincte de la première partie de guidage (14a), le long de laquelle ledit élément de guidage (13) correspondant peut glisser de façon à soumettre le réceptacle (3) à un second mouvement de rotation et de translation, différent du premier mouvement de rotation et de translation, de la configuration fermée à la configuration ouverte.

2. Unité d'infusion (1) selon la revendication précédente, **caractérisée en ce qu'**une tige de transmission (15) est prévue, reliant ledit levier de commande (12) audit réceptacle (3).

3. Unité d'infusion (1) selon l'une quelconque des revendications précédentes, **caractérisée en ce que** ledit piston de fermeture (5) est fixe.

4. Unité d'infusion (1) selon l'une quelconque des revendications précédentes, **caractérisée en ce que** ledit réceptacle (3) a un piston d'expulsion (16) associé à celui-ci, glissant de manière coaxiale à l'intérieur de lui et pourvu d'une tige (16a) qui s'étend à l'extérieur du réceptacle (3) à travers une base (3b) de ce dernier.

5. Unité d'infusion (1) selon la revendication précédente, **caractérisée en ce que** ledit levier de commande (12) comporte, le long de son axe d'articulation (12'), une came d'entraînement (17) apte à être mise en interaction avec l'extrémité (16a') de la tige (16a) du piston d'expulsion (16) de façon à déplacer ce dernier d'une position adjacente à la base (3b) du réceptacle (3) à une position d'expulsion adjacente à une ouverture (3a) du réceptacle.

6. Unité d'infusion (1) selon l'une quelconque des revendications précédentes, **caractérisée en ce qu'**elle comprend un dispositif formant valve mécanique servant à émulsifier l'infusion, comprenant un élément d'obturation (23) apte à effectuer une translation dans un corps de valve (24) de façon à fermer un trajet d'écoulement sortant (19) pour l'infusion présente dans le réceptacle (3), et un élément élastique (25) configuré et disposé de façon à exercer sur l'élément d'obturation (23) une force de poussée élastique ajustée lors de la fermeture dudit trajet d'écoulement sortant (19).

7. Unité d'infusion (1) selon l'une quelconque des revendications précédentes, **caractérisée en ce que** ledit piston de fermeture (5) comporte un trajet d'alimentation (18) servant à amener de l'eau à la chambre d'infusion (4), un trajet d'évacuation (20) en communication fluidique avec le trajet d'alimentation (18), et un dispositif formant valve apte à être entraîné par la pression de l'eau de façon à fermer de manière sélective ledit trajet d'évacuation (20).

8. Unité d'infusion (1) selon la revendication précédente, **caractérisée en ce que** ledit dispositif formant valve apte à être entraîné par la pression de l'eau comprend une membrane (22) déformable de manière élastique.

9. Machine à café automatique comprenant une unité d'infusion (1) selon l'une quelconque des revendications précédentes.
